# EUROPÄISCHE PATENTSCHRIFT

(11) **EP 2 729 270 B1**
(45) Veröffentlichungstag und Bekanntmachung des Hinweises auf die Patenterteilung: **14.08.2019**
(21) Anmeldenummer: 12731008.4
(22) Anmeldetag: 04.07.2012
(51) Int. Cl.: B23B 29/034

(54) **NACHSTELLSYSTEM**
ADJUSTMENT SYSTEM
SYSTÈME D'AJUSTAGE

(30) Priorität: 06.07.2011 DE 102011051609
(43) Veröffentlichungstag der Anmeldung: 14.05.2014
(73) Patentinhaber: Mauser-Werke Oberndorf Maschinenbau GmbH, 78727 Oberndorf (DE)
(72) Erfinder: RÖMPP, Wolfgang, 78739 Hardt (DE)
(74) Vertreter: Rumrich, Gabriele
(86) Internationale Anmeldenummer: PCT/EP2012/063046
(87) Internationale Veröffentlichungsnummer: WO 2013/004752

(56) Entgegenhaltungen:
- EP-A1- 1 302 279
- WO-A1-01/43904
- WO-A1-2009/016777
- CN-A- 102 310 340
- DE-A1-102007 017 800
- GB-A- 2 317 586
- US-A- 4 778 313
- US-A- 4 970 464

## Beschreibung

Die Erfindung betrifft ein Nachstellsystem gemäß dem Oberbegriff des Patentanspruchs 1.

Derartige Nachstellsysteme werden beispielsweise zum Nachstellen bei einem Verschleiß des Werkzeugs oder beim Feinstbearbeiten von Innen- und Außenkonturen von Werkstücken verwendet, wobei diese Konturen beispielsweise zylinderförmig, exzentrisch oder unrund ausgeführt sein können. Die DE 10 2007 017 800 A1 offenbart ein Nachstellsystem, bei dem eine Spindel einen Membrankippkopf trägt, über den eine Werkzeugschneide in Radialrichtung verstellbar ist, um beispielsweise ein kleines Pleuelauge rund, elliptisch und/oder in Kolbenbolzenlängsachse trompetenförmig auszubilden. Die Verstellung des Membrankippkopfes erfolgt über ein linear verstellbares Betätigungselement, auch Zugstange genannt, über die ein mit einer Membran in Wirkverbindung stehender, die Werkzeugschneide tragender Werkzeugkopf mit Bezug zur Spindelachse gekippt werden kann, um die Radialverstellung zu bewirken. Die Zugstange ist in der Spindel gelagert und rotiert mit dieser mit. Ein rückwärtiger Endabschnitt der Zugstange ist aus der Spindel herausgeführt und dort über eine Lageranordnung an einem Schlitten abgelagert, der über einen Aktor verstellbar ist. Der Antrieb der Spindel erfolgt bei den bekannten Lösungen über einen Antriebsmotor, der parallel zur Spindelachse angeordnet ist und mit der Spindel über einen Riementrieb oder dergleichen in Wirkverbindung steht.

Nachteilig bei diesen Lösungen ist, dass für den Spindelantrieb und auch die Lagerung der Zugstange ein erheblicher Bauraum und vorrichtungstechnischer Aufwand erforderlich ist.

In der DE 44 01 496 C3 ist eine Verstelleinrichtung zum Bearbeiten von runden, unrunden und/oder nicht zylinderförmigen Konturen beschrieben, bei dem die Verstellung einer Werkzeugschneide über einen Kopf mit Piezo-Translatoren erfolgt.

Nachteilig bei dieser Lösung ist, dass ein erheblicher regelungstechnischer Aufwand zur Ansteuerung der Piezo-Translatoren erforderlich ist. Zudem ist der Verstellweg bei derartigen Piezo-Translatoren beschränkt.

Die EP 1 302 279 A1 zeigt ein gattungsgemäßes radiales Nachstellsystem für eine Werkzeugschneide mit einem magnetostriktiven Messsystem, dessen Positionssensor rückseitig an der Werkzeugspindel angeordnet ist.

Demgegenüber liegt der Erfindung die Aufgabe zugrunde, ein Nachstellsystem zu schaffen, das bei einem kompakten Aufbau einen verringerten vorrichtungstechnischen Aufwand erfordert.

Diese Aufgabe wird durch ein Nachstellsystem mit den Merkmalen des Patentanspruchs 1 gelöst.

Vorteilhafte Weiterbildungen des Nachstellsystems sind Gegenstand der Unteransprüche.

Erfindungsgemäß hat das Nachstellsystem einen zumindest eine Werkzeugschneide oder dergleichen tragenden Zustellkopf, der an einer Spindel gehalten ist, in der ein etwa in Achsrichtung von einem Stellantrieb verstellbares Betätigungselement geführt ist, das zur Radialverstellung der Werkzeugschneide in Wirkverbindung mit dem Zustellkopf steht. Erfindungsgemäß ist der Stellantrieb als berührungsloser Linearantrieb ausgeführt.

Durch diese Maßnahme ist es nicht mehr erforderlich, das Betätigungselement - wie beim Stand der Technik - rückseitig abzulagern, da das Betätigungselement in Wirkverbindung oder einstückig mit dem verstellbaren Teil des Linearantriebs verbunden ist, der seinerseits gegenüber dem nicht verstellbaren Teil des Linearantriebs (Stator) (Läufer) bewegbar ist, sodass es keine Rolle spielt, ob der Läufer rotiert oder stillsteht. Durch den Wegfall der rückseitigen Lagerung des Betätigungselementes kann das gesamte Verstellsystem äußerst kompakt mit geringem vorrichtungstechnischem Aufwand ausgeführt werden, sodass es auch bei kleinen Bearbeitungseinheiten einsetzbar ist.

Bei der Erfindung ist die Spindel mit einem Direktantrieb ausgeführt, der koaxial zur Spindelachse angeordnet ist. Dies ermöglicht es, den Bauraum gegenüber den eingangs beschriebenen Lösungen mit achsparallelem Antrieb weiter zu minimieren. Die Integration des Spindelantriebs in die Spindel selbst und die Verwendung eines Linearantriebs zur Betätigung des Betätigungselementes ermöglicht es, die gesamte Einheit vor dem Einbau in die Bearbeitungseinheit im Hinblick auf Wucht und Schlag zu testen und entsprechend zu kalibrieren.

Dabei können Permanentmagnete auf einem Spindelkörper angeordnet werden, die von einer Spulenwicklung umgriffen sind.

Der Linearantrieb wird bei der Erfindung rückseitig im Bereich eines aus der Spindel herausgeführten Endabschnitts des Betätigungselementes angeordnet.

Das Messsystem ist besonders einfach aufgebaut, da es als magnetostriktives System ausgeführt ist.

Dabei ist ein Wellenleiter des Messsystems im Betätigungselement gelagert und trägt einen Magnetring. Das zugehörige Wandlerteil ist rückwärtig an der Spindel gehalten.

Dabei wird es bevorzugt, wenn der Wellenleiter durch das Motorgehäuse des Linearantriebs hindurchgeführt ist und in das an das Motorgehäuse angesetzte Wandlerteil eintaucht.

Das Nachstellsystem ist besonders einfach aufgebaut, wenn rückseitig an die Spindel ein Motorgehäuse des Linearantriebs angesetzt ist, in dem zumindest eine Statorwicklung angeordnet ist, während ein Läufer mit dem Betätigungselement verbunden oder einstückig mit diesem ausgeführt ist.

Der Linearantrieb ist vorzugsweise permanentmagneterregt ausgeführt.

Bei einem Ausführungsbeispiel der Erfindung ist das Betätigungselement eine Zugstange, über die der Zustellkopf zur Radialverstellung betätigbar ist.

Zur Regelung des Hubs des Betätigungselementes kann ein Messsystem vorgesehen werden, über das der Hub erfasst und als Ist-Größe an eine zentrale Steuereinheit gemeldet wird.

Zur Minimierung von Ungenauigkeiten aufgrund von Wärmedehnungen und dergleichen wird der Magnetring des Wellenleiters vorzugsweise in einem gekühlten Bereich des Zustellkopfes angeordnet.

Bei einem bevorzugten Ausführungsbeispiel der Erfindung ist der Zustellkopf als Membrankippkopf ausgeführt.

Die Genauigkeit aufgrund von unerwünschten Wärmedehnungen der Komponenten lässt sich weiter verbessern, wenn das Nachstellsystem mit einer integrierten Kühlung ausgeführt ist.

Ein bevorzugtes Ausführungsbeispiel der Erfindung wird im Folgenden anhand einer einzigen schematischen Zeichnung erläutert, die einen stark vereinfachten Längsschnitt durch ein erfindungsgemäßes Nachstellsystem zeigt.

Demgemäß besteht das erfindungsgemäße Nachstellsystem 1 im Prinzip aus einer Spindel 2, die einen Zustellkopf, im erläuterten Fall einen Membrankippkopf 4 trägt, über den eine Werkzeugschneide 6 in Zustellrichtung verstellbar ist, sodass die eingangs erläuterten Geometrien, beispielsweise unrunde, ovale Bohrungen oder in Bohrungsachse trompetenförmig ausgeführte Bohrungen von Werkstücken, beispielsweise Pleuelaugen feinbearbeitet werden können. Selbstverständlich können anstelle eines Membrankippkopfes 4 auch andere Zustellköpfe, wie beispielsweise ein Parallelogrammkopf, verwendet werden, die während der Bearbeitung eine Verstellung der Werkzeugschneidenposition ermöglichen.

Die Spindel 2 hat ein Spindelgehäuse 8, das an der Werkzeugmaschine oder Bearbeitungseinheit befestigt wird. Im Spindelgehäuse 8 ist über eine Lageranordnung 10 ein Spindelkörper 12 drehbar gelagert. An einem stirnseitig aus dem Spindelgehäuse 8 auskragenden Flansch 14 ist der Membrankippkopf 4 gespannt. Beim dargestellten Ausführungsbeispiel erfolgt der Rotationsantrieb des Spindelkörpers 12 über einen integrierten Direktantrieb 16, der als Synchron- oder Asynchronmotor ausgeführt sein kann, wobei eine Wicklung oder mehrere Statorwicklungen 18 im Gehäuse 8 angeordnet sind, während als Permanentmagnete ausgeführte Magnete 20 des Direktantriebs 16 am Außenumfang des Spindelkörpers 12 angeordnet sind, sodass bei Ansteuerung der Statorwicklung 18 und bei Aufbau eines entsprechenden bewegten magnetischen Drehfeldes im Stator der Spulenkörper 12 mit der über die Steuerung eingestellten Drehzahl rotiert. Anstelle der Permanentmagnete können auch Elektromagnete verwendet werden. Der Aufbau derartiger Direktantriebe ist als solches bekannt, sodass weitere Erläuterungen entbehrlich sind.

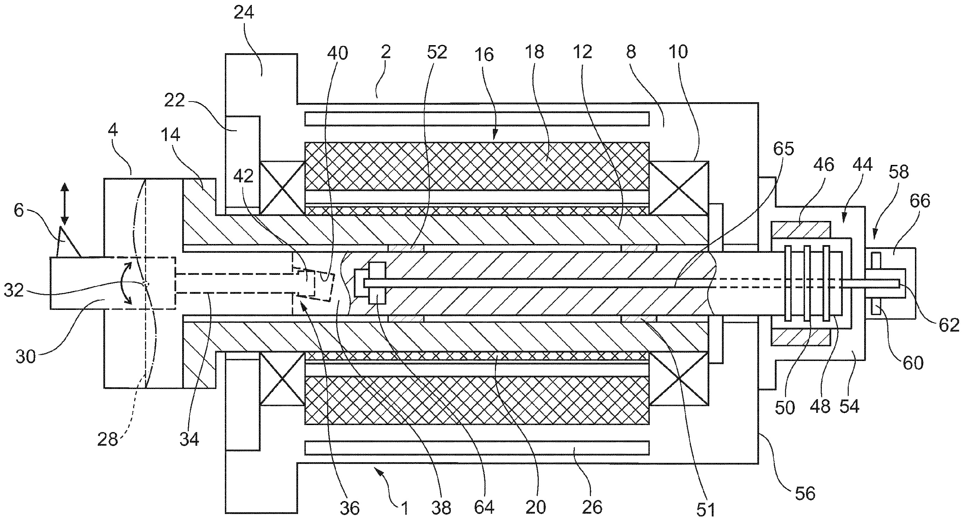

Die Statorwicklung 18 ist in einem die Magnete 20 umgreifenden Spulenkörper aufgenommen, der in den Spindelkörper 12 eingesetzt ist und an dem auch die linken und rechten Lager der Lageranordnung 10 in Axialrichtung abgestützt sind. Die sonstige Abstützung der Lager der Lageranordnung 10 erfolgt an Radial- oder Axialschultern des Spindelkörpers, wobei das in der Figur linke Lager in Axialrichtung nach links hin an einer Stirnplatte 22 abgestützt ist, die in einen in Radialrichtung vorspringenden Befestigungsflansch 24 des Spindelkörpers 8 eingesetzt ist.

Die Axialabstützung des Spindelkörpers 12 ist in der schematischen Darstellung nicht gezeigt, hierzu kann auf den vorhandenen Stand der Technik verwiesen werden. Wie in der Figur angedeutet, ist in das Spindelgehäuse 8 noch eine Kühlung 26 integriert, sodass das Nachstellsystem auf einen vorbestimmten Temperaturbereich temperiert werden kann und somit Ungenauigkeiten durch Wärmedehnung der Komponenten minimiert sind. Die Kühlung 26 kann an den Kühl-/Schmiermittelkreislauf der Werkzeugmaschine/ Bearbeitungseinheit angeschlossen sein.

Der Aufbau eines Membrankippkopfes 4 ist beispielsweise aus der eingangs genannten DE 10 2007 017 800 A1 bekannt, sodass hier nur für die Erfindung wesentliche Bauelemente erläutert werden. Demgemäß hat der Membrankippkopf 4 eine Membran 28, die in dem Membrankippkopf 4 gelagert ist und mit einem Werkzeugkopf 30 in Wirkverbindung steht, sodass bei einer Auslenkung (strichpunktiert) der Membran 28 der Werkzeugkopf 30 in Pfeilrichtung um eine Achse 32 kippt und somit die Werkzeugschneide 6 in Radialrichtung verstellt wird. Dieser Werkzeugkopf 30 ist über einen gestrichelt angedeuteten Schwenkzapfen 34 und eine Kulissenführung 36 mit einer Zugstange 38 verbunden. Diese hat an ihrem werkzeugkopfseitigen Endabschnitt eine schräg zur Spindelachse angestellte Gabelnut 40, in die ein in Radialrichtung etwas erweiterter Kopf 42 des Schwenkzapfens 34 eintaucht, sodass dieser bei einer Axialverschiebung der Zugstange 38 (nach links oder rechts in der Figur) um die Achse 32 ausgelenkt wird und somit die Werkzeugschneide 6 in der vorbeschriebenen Weise verstellt. Hinsichtlich weiterer Details wird auf die genannte DE 10 2007 017 800 A1 verwiesen.

Die Verstellung der Zugstange 38 in Richtung der Spindelachse erfolgt erfindungsgemäß über einen Linearantrieb 44, der beispielsweise als permanentmagneterregter Synchronmotor ausgeführt sein kann. Ein Stator dieses Linearantriebs 44 kann beispielsweise eine in der Figur angedeutete Dreiphasenwicklung 46 haben, die im Prinzip aus aufeinandergeschichteten Solenoidspulen besteht. Ein Läufer 48 oder Lineator des Linearantriebs 44 ist in an sich bekannter Weise mit einer Vielzahl von Permanentmagneten 50 ausgeführt und entweder an der Zugstange 38 befestigt oder einstückig mit dieser ausgeführt. Die Zugstange 38 bzw. der Läufer 48 ist über Linearlager 51, 52 im Spindelkörper 12 mit hoher Präzision geführt. Der Läufer 48 ragt in Axialrichtung nach rechts aus dem Spindelgehäuse 8 heraus und taucht in ein etwa topfförmig ausgebildetes Motorgehäuse 54 ein, das an die in der Figur rechts liegende Stirnfläche 56 angesetzt ist. Demgemäß ist der Linearantrieb 44 in etwa als zylinderförmige, sehr kompakt bauende Einheit ausgebildet, die deutlich weniger Bauraum erfordert als die beim Stand der Technik verwendeten Konstruktionen, bei denen die mit dem Spindelkörper 12 mit rotierende Zugstange 38 im Bereich des Antriebs abgelagert werden muss - dies ist aufgrund des berührungslosen Konzeptes des Linearmotors 44 nicht erforderlich.

Die Verstellung des Läufers 48 erfolgt durch Ansteuerung der Dreiphasenwicklung über die üblichen Regeleinrichtungen, beispielsweise PWM-Umrichter, sodass eine äußerst hohe Positioniergenauigkeit erzielbar ist.

Zur Lageerfassung der Hubposition des Läufers 48 und damit der Zugstange 38 ist ein magnetostriktives Messsystem 58 mit einem Wegaufnehmer vorgesehen. Dieser besteht im Prinzip aus einem Wandlerteil 60, das in Wirkverbindung steht mit einem Wellenleiter 62, der beispielsweise durch ein Kupferrohr gebildet ist, das in eine Axialbohrung 65 der Zugstange 38 eintaucht und sich bis hin zur Ankoppelung des Membrankippkopfes 4 erstreckt. An dem werkzeugkopfseitigen Endabschnitt des Wellenleiters 62 ist ein Permanentmagnetring 64 angeordnet, der beim dargestellten Ausführungsbeispiel als Magnetring ausgebildet ist. Über das Wandlerteil 60 wird im Wellenleiter 62 ein Stromimpuls generiert, der sich als Magnetfeld im Wellenleiter 62 ausbreitet. Das Magnetfeld des Permanentmagnetrings 64 verläuft in etwa senkrecht zu dem durch den Stromimpuls im Wellenleiter 62 erzeugten Magnetfeld, sodass durch die Überlagerung der beiden Magnetfelder der Wellenleiter 62 elastisch verformt wird. Diese elastische Verformung breitet sich im Wellenleiter 62 aus, wobei die Ausbreitungsgeschwindigkeit sehr hoch ist. Im Wandlerteil 60 wird der mechanische Impuls in ein elektrisches Signal umgewandelt und die Laufzeit berechnet, die dieser mechanische Impuls vom Entstehungsort, d.h. von der Position des Permanentmagnetrings 64 bis zum Wandlerteil 60 benötigt. Diese Laufzeit ist dann direkt proportional zu dem Abstand zwischen dem Permanentmagnetring 64 und dem Wandlerteil 60 und somit proportional zum Hub der Zugstange 38. Das Wandlerteil 60 ist in einem Signalwandlergehäuse 66 aufgenommen, das stirnseitig an das Motorgehäuse 54 angesetzt ist, wobei der Wellenleiter 62 letzteres durchsetzt und in das Signalwandlergehäuse 66 eintaucht.

Über das magnetostriktive Messsystem 58 kann somit der Hub des Läufers 48 bzw. der Zugstange 38 äußerst exakt bestimmt werden, aus einer Kennlinie wird dann entsprechend die Verschwenkung des Werkzeugkopfs 30 und damit die Werkzeugschneidenposition bestimmt, sodass eine äußerst präzise Bearbeitung ermöglicht ist. Wie dargestellt, ist der Wellenleiter 62 mit einer vergleichsweise großen Axiallänge ausgeführt, wobei durch die Positionierung des Permanentmagnetrings 64 im Bereich der Kühlung 26 und sehr nahe zum Membrankippkopf 4 Ungenauigkeiten aufgrund von Wärmedehnungen minimiert sind.

Das beschriebene Nachstellsystem zeichnet sich gegenüber den eingangs beschriebenen Lösungen durch einen sehr kompakten und einfachen Aufbau aus, wobei die Bearbeitungsgenauigkeit durch die erhöhte Steifigkeit des Nachstellsystems verbessert ist.

Bei dem dargestellten Ausführungsbeispiel rotiert die Zugstange 38 mit dem Spindelkörper 12 mit, in entsprechender Weise dreht sich auch der Wellenleiter 62 mit dem Spindelkörper 12 - aufgrund des berührungslosen Linearantriebs 44 und auch des weitestgehend berührungslosen magnetostriktiven Messsystems 58 bedarf es jedoch, wie bereits erwähnt, keiner aufwendigen Ablagerung der Antriebs- und Messsystemkomponenten.

Offenbart ist ein Nachstellsystem mit einem eine Werkzeugschneide tragenden Zustellkopf, der an einer Spindel gehalten ist. Die Zustellung der Werkzeugschneide erfolgt über ein Betätigungselement, das durch einen berührungslosen Linearantrieb verstellbar ist.

### Bezugszeichenliste

- 1: Zustellsystem
- 2: Spindel
- 4: Membrankippkopf
- 6: Werkzeugschneide
- 8: Spindelgehäuse
- 10: Lageranordnung
- 12: Spindelkörper
- 14: Flansch
- 16: Direktantrieb
- 18: Statorwicklung
- 20: Magnet
- 22: Stirnplatte
- 24: Befestigungsflansch
- 26: Kühlung
- 28: Membran
- 30: Werkzeug kopf
- 32: Achse
- 34: Schwenkzapfen
- 36: Kulissenführung
- 38: Zugstange
- 40: Gabelnut
- 42: Kopf
- 44: Linearantrieb
- 46: Dreiphasenwicklung
- 48: Läufer
- 50: Permanentmagnet
- 51: Linearlager
- 52: Linearlager
- 54: Motorgehäuse
- 56: Stirnfläche
- 58: Messsystem
- 60: Wandlerteil
- 62: Wellenleiter
- 64: Permanentmagnetring
- 65: Axialbohrung
- 66: Signalwandlergehäuse

## Patentansprüche

1. Nachstellsystem mit einem zumindest eine Werkzeugschneide (6) tragenden Zustellkopf, der an einer Spindel (2) gehalten ist, in der ein etwa in Achsrichtung von einem Linearantrieb (44) verstellbares Betätigungselement geführt ist, das zur Radialverstellung der Werkzeugschneide (6) in Wirkverbindung mit dem Zustellkopf steht, wobei ein magnetostriktives Messsystem (58) zur Erfassung eines Hubs des Betätigungselementes vorgesehen ist, mit einem Wellenleiter (62), der im Betätigungselement gelagert ist, und an dem ein Permanentmagnetring (64) angeordnet ist, wobei ein Wandlerteil (60) rückwärtig an der Spindel (2) gehalten ist, **dadurch gekennzeichnet, dass** die Spindel (2) mit einem integrierten, koaxial zur Spindelachse angeordneten Direktantrieb (16) ausgeführt ist, und dass der Linearantrieb (44) im Bereich eines rückseitig aus der Spindel (2) herausgeführten Endabschnitts des Betätigungselementes angeordnet ist, und dass der Permanentmagnetring (64) im Bereich des Zustellkopfes auf dem Wellenleiter (62) angeordnet ist.

2. Nachstellsystem nach Patentanspruch 1, wobei Magnete (20) des Direktantriebs (16) auf einem Spindelkörper (12) angeordnet und von einer Statorwicklung (18) umgriffen sind.

3. Nachstellsystem nach Patentanspruch 1, wobei rückseitig ein Motorgehäuse (54) vorgesehen ist, in dem zumindest eine Statorwicklung (18) angeordnet ist, während ein Läufer (48) des Linearantriebs (44) mit dem Betätigungselement verbunden oder einstückig mit diesem ausgeführt ist.

4. Nachstellsystem nach Patentanspruch 3, wobei der Linearantrieb (44) permanentmagneterregt ist.

5. Nachstellsystem nach einem der vorhergehenden Patentansprüche, wobei das Betätigungselement eine Zugstange (38) ist.

6. Nachstellsystem nach Patentanspruch 3, wobei der Wellenleiter (62) durch das Motorgehäuse (54) hindurchgeführt ist und in das rückseitig angesetzte Wandlerteil (60) eintaucht.

7. Nachstellsystem nach einem der vorhergehenden Patentansprüche, wobei der Zustellkopf ein Membrankippkopf (4) ist.

8. Nachstellsystem nach einem der vorhergehenden Patentansprüche, mit einer Kühlung (26).

## Claims

1. Adjustment system, having a feed head which carries at least one tool blade (6) and is held on a spindle (2) in which an actuation element is guided which is adjustable approximately in the axial direction by a linear drive (44) and is operatively connected to the feed head for radial adjustment of the tool blade (6), wherein a magnetostrictive measuring system (58) is provided for detecting a stroke of the actuation element, having a waveguide (62) which is mounted in the actuation element, and on which a permanent magnet ring (64) is arranged, wherein a transducer part (60) is held at the rear on the spindle (2), **characterized in that** the spindle (2) is designed with an integrated direct drive (16) arranged coaxially with the spindle axis, and **in that** the linear drive (44) is arranged in the region of an end section of the actuation element which is led out of the spindle (2) at the rear, and **in that** the permanent magnet ring (64) is arranged on the waveguide (62) in the region of the feed head.

2. Adjustment system according to claim 1, wherein magnets (20) of the direct drive (16) are arranged on a spindle body (12) and are surrounded by a stator winding (18).

3. Adjustment system according to claim 1, wherein a motor housing (54) is provided at the rear, in which at least one stator winding (18) is arranged, while a rotor (48) of the linear drive (44) is connected to the actuation element or is designed integrally therewith.

4. Adjustment system according to claim 3, wherein the linear drive (44) is excited by permanent magnets.

5. Adjustment system according to one of the preceding claims, wherein the actuation element is a tie rod (38).

6. Adjustment system according to claim 3, wherein the waveguide (62) is guided through the motor housing (54) and immerses into the transducer part (60) attached at the rear.

7. Adjustment system according to one of the preceding claims, wherein the feed head is a membrane tilting head (4).

8. Adjustment system according to one of the preceding claims, comprising a cooling system (26).

## Revendications

1. Système d'ajustement avec une tête d'avance portant au moins une lame d'outil (6) et retenue sur une broche (2), dans laquelle est guidé un élément d'actionnement déplaçable par un entraînement linéaire (44) approximativement dans le sens de l'axe, qui est en liaison active avec la tête d'avance pour l'ajustement radial de la lame d'outil (6), dans lequel est prévu un système de mesure magnétostrictif (58) pour la détection d'une course de l'élément d'actionnement, avec un guide d'ondes (62) supporté dans l'élément d'actionnement et sur lequel un anneau d'aimants permanents (64) est disposé, une partie de convertisseur (60) étant tenue sur l'arrière sur la broche (2), **caractérisé en ce que** la broche (2) est réalisée avec un entraînement direct (16) intégré coaxial de l'axe de la broche et **en ce que** l'entraînement linéaire (44) est disposé au niveau d'une partie d'extrémité de l'élément d'actionnement qui sort de la broche (2) vers l'arrière et **en ce que** l'anneau d'aimants permanents (64) est disposé sur le guide d'ondes (62) au niveau de la tête d'avance.

2. Système d'ajustement selon la revendication 1, dans lequel des aimants (20) de l'entraînement direct (16) sont disposés sur un corps de broche (12) et entourés par un enroulement de stator (18).

3. Système d'ajustement selon la revendication 1, dans lequel est prévu sur l'arrière un boîtier de moteur (54) dans lequel est disposé au moins un enroulement de stator (18), tandis qu'un curseur (48) de l'entraînement linéaire (44) est relié à l'élément d'actionnement ou formé d'un seul tenant avec celui-ci.

4. Système d'ajustement selon la revendication 3, dans lequel l'entraînement linéaire (44) est excité par des aimants permanents.

5. Système d'ajustement selon l'une des revendications précédentes, dans lequel l'élément d'actionnement est une tringle de traction (38).

6. Système d'ajustement selon la revendication 3, dans lequel le guide d'ondes (62) est passé à travers le boîtier du moteur (54) et pénètre dans la partie de convertisseur (60) posée sur l'arrière.

7. Système d'ajustement selon l'une des revendications précédentes, dans lequel la tête d'avance est une tête oscillante à membrane (4).

8. Système d'ajustement selon l'une des revendications précédentes, muni d'un refroidissement (26).
